# EUROPEAN PATENT APPLICATION

(11) **EP 3 026 548 A1**
(43) Date of publication of application: **01.06.2016**
(21) Application number: 14195066.7
(22) Date of filing: 27.11.2014
(51) Int. Cl.: G06F 3/12

(54) **Image forming apparatus**

(71) Applicant: Oki Data Corporation, Tokyo 108-8551 (JP)
(72) Inventor: Fukuda, Takafumi, Tokyo 108-8551 (JP); Rabel, Patrick, 94633 Rungis (FR)
(74) Representative: Betten & Resch

(57) **Abstract**

An image forming apparatus includes a data reception unit (15) and a printing processing unit (16, 17, 18). The data reception unit (15) receives medical data including medical image data transmitted by SCU (200, 300) in accordance with DICOM standard along with specifying of an AET. The printing processing unit (16, 17, 18) prints a cover page and a back cover page on a first surface of a medium, and lays out and prints at least one page including a medical image on a second surface of the medium opposite to the first surface based on the specified AET.

## Description

### BACKGROUND OF THE INVENTION

The present invention relates to an image forming apparatus that receives medical data in accordance with DICOM (Digital Imaging and Communications in Medicine) standard, and prints a medical image on a medium.

In a conventional art, a medical image taken by a modality is transmitted into medical data in accordance with DICOM standard. The medical data is transmitted in accordance with the DICOM standard to an image forming apparatus, and the medical image is printed on a medium by the image forming apparatus (see, for example, Japanese Laid-open Patent Publication No. 2002-190937).

Recently, there is a need for handing (providing) the medium on which a medical image is printed to a patient. Particularly, there arises a need for printing a medical image on a medium in a format demanded by a patient.

### SUMMARY OF THE INVENTION

The present disclosure is intended to provide an image forming apparatus capable of printing a medical image on a medium in a format demanded by a patient.

According to an aspect of the present invention, there is provided an image forming apparatus including a data reception unit that receives medical data including medical image data transmitted by SCU (Service Class User) in accordance with DICOM (Digital Imaging and Communications in Medicine) standard along with specifying of an AET (Application Entity Title), and a printing processing unit that prints a cover page and a back cover page on a first surface of a medium, and lays out and prints at least one page including a medical image on a second surface of the medium opposite to the first surface in accordance with the specified AET.

With such a configuration, it becomes possible to print the medical image on the medium in a format demanded by a patient.

According to another aspect of the present invention, there is provided an image forming apparatus including a data reception unit that receives medical data including medical image data and associated information, and an printing processing unit that prints a cover page and a back cover page on a first surface of a medium, and lays out and prints at least one page including a medical image on a second surface of the medium opposite to the first surface in accordance with the associated information included in the medical data.

### BRIEF DESCRIPTION OF THE DRAWINGS

In the attached drawings:
FIG. 1 is a block diagram showing a printing processing system including an image forming apparatus according to the first embodiment;
FIG. 2 is a block diagram showing a configuration of the image forming apparatus according to the fist embodiment;
FIG. 3 is a schematic view for illustrating a main part of DICOM data;
FIG. 4 is a schematic view showing an AET registration screen according to the first embodiment;
FIG. 5 is a schematic view showing an AET edition screen according to the first embodiment;
FIGS. 6A, 6B and 6C are schematic views showing examples of a cover page image, a back cover page image and an adjustment image according to the first embodiment;
FIG. 7 is a schematic view showing a booklet printing image data registration screen according to the first embodiment;
FIG. 8 is a flowchart for illustrating a basic operation of the image forming apparatus according to the first embodiment;
FIG. 9 is a flowchart for illustrating processing of a printing job creation unit according to the first embodiment;
FIGS. 10A through 10J are schematic views showing an example of a printing result of the image forming apparatus according to the first embodiment;
FIGS. 11A, 11B, 11C and 11D are schematic views showing an example of a printing result when medical images are arranged in two rows and three columns in each page;
FIGS. 12A, 12B, 12C and 12D are schematic views showing an example of a printing result according to a modification of the first embodiment;
FIGS. 13A, 13B, 13C and 13D are schematic views showing another example of the printing result according to the modification of the first embodiment;
FIG. 14 is a schematic view showing still another example of the printing result according to the modification of the first embodiment;
FIG. 15 is a schematic view showing a yet another example of the printing result according to the modification of the first embodiment;
FIG. 16 is a schematic view showing an AET edition screen according to the modification of the first embodiment;
FIG. 17 is a block diagram showing a storage device of an image forming apparatus according to the modification of the first embodiment; and
FIG. 18 is a flowchart for illustrating a basic operation of the image forming apparatus according to the modification of the first embodiment.

### DETAILED DESCRIPTION OF THE PREFERRED EMBODIMENT

An embodiment and modifications of the present invention will be described with reference to the attached drawings.

### FIRST EMBODIMENT 1.

In a conventional medical image diagnosis, diagnosis was carried out using an analog image (for example, an X-ray photograph) printed on a film or the like. Lately, in accordance with DICOM (Digital Imaging and Communications in Medicine) standard, medical data (i.e., DICOM data) is created, which includes a digital image and associated information such as a patient name and a taking data. Therefore, in many cases, diagnosis is carried out by transmitting the DICOM data over a network, and displaying the medical image on a high-definition monitor or the like.

Nowadays, according to dissemination of informed consent, there arises a need for transmitting the DICOM data to an image forming apparatus and printing a medical image on a medium such as a plain paper so that the medium can be handed to a patient. In such a case, it is not preferred to hand the medium to the patient in such a fashion that the medical image can be easily seen by another person in terms of privacy protection.

Therefore, before the medium with the medical image is handed to the patient, it is necessary to put the medium in an envelope, or to attach a cover sheet (which is prepared separately) on the medium using a stapler or clip. However, preparation of the envelope increases cost, and preparation of the cover sheet lowers operation efficiency.

Therefore, according to the first embodiment, when an image forming apparatus receives DICOM data from an SCU (Service Class User) such as a modality along with specifying of an AET (Application Entity Title), the image forming apparatus lays out and prints a medical image on a medium in accordance with the specified AET. By folding the medium into a booklet, the medical image can be prevented from being seen from another person, and privacy protection is ensured.

Hereinafter, a configuration example of the image forming apparatus according to the first embodiment will be described along with a printing processing system including the image forming apparatus.

### <ENTIRE CONFIGURATION OF PRINTING PROCESSING SYSTEM>

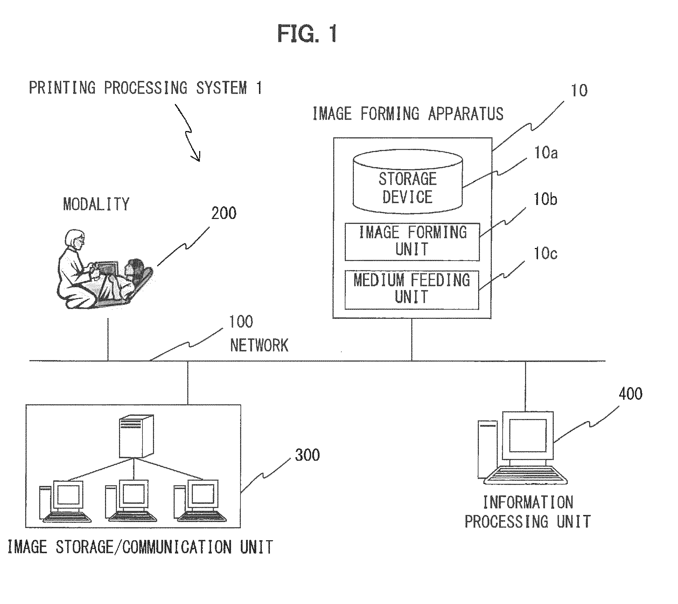

FIG. 1 is a block diagram showing an entire configuration of the printing processing system 1 including the image forming apparatus 10 according to the first embodiment. The printing processing system 1 includes the image forming apparatus (i.e., a printer) 10, a modality 200, an image storage/communication system 300, and an information processing apparatus 400. The image forming apparatus 10, the modality 200, the image storage/communication system 300 and the information processing apparatus 400 are connected with each other via a network 100.

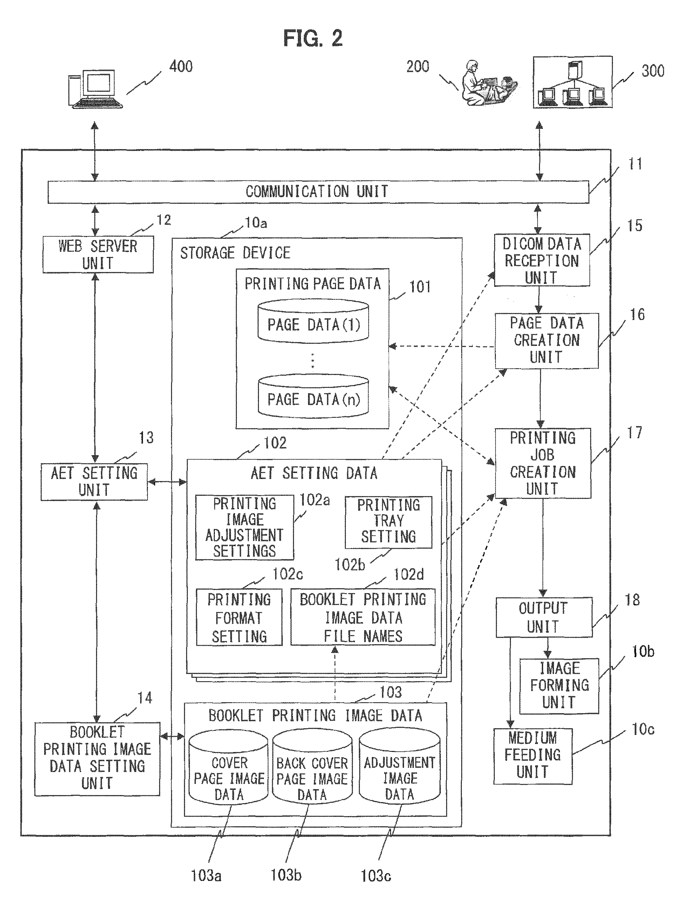

The image forming apparatus 10 includes a storage device 10a, an image forming unit 10b and a medium feeding unit 10c. The storage device 10a stores information described later. The storage device 10a is, for example, an external storage device such as a hard disk drive. The image forming unit 10b forms an image on a medium (such as a paper) using, for example, electrophotography. The medium feeding unit 10c feeds the medium from a printing tray to the image forming unit 10b. In order to perform duplex printing, the medium feeding unit 10c has a function to feed the medium to the image forming unit 10b twice while turning the medium upside down. Other elements (FIG. 2) of the image forming apparatus 10 will be described later.

The modality 200 takes an image, and creates DICOM data (i.e., medical data) including medical image data in accordance with the DICOM standard. Further, the modality 200 transmits the DICOM data to a specified apparatus (for example, the image forming apparatus 10) over the network 100 in accordance with the DICOM standard. The modality 200 includes an operation panel. A user (for example, a doctor) can operate the operation panel to transmit a service request (for example, a request to print a medical image) to the image forming apparatus 10.

The modality 200 is, for example, an ultrasound diagnostic (echography) apparatus, a computed tomography (CT) apparatus, a magnetic resonance imaging (MRI) apparatus, an X-ray imaging apparatus, or the like.

The image storage/communication system 300 stores the DICOM data (transmitted from the modality 200) in a database, and manages the DICOM data. Further, in response to a request from another apparatus (for example, the image processing apparatus 400) belonging to the printing processing system 1, the image storage/communication system 300 transmits the DICOM data selected from the database. The image storage/ communication system 300 is also referred to as a picture archiving and communication system (PACS).

The information processing apparatus 400 is, for example, a personal computer. The information processing apparatus 400 includes a web browser. The information processing apparatus 400 is used to perform setting of, for example, an AET (Application Entity Title) described later.

### <CONFIGURATION OF IMAGE FORMING APPARATUS>

FIG. 2 is a block diagram showing a configuration of the image forming apparatus 10 according to the first embodiment. The image forming apparatus 10 includes a communication unit 11, a web server unit 12, an AET setting unit 13, a booklet printing image data setting unit 14, a DICOM data reception unit 15, a page data creation unit 16, a printing job creation unit 17 and an output unit 18. As described with reference to FIG. 1, the image forming apparatus 10 includes the storage device 10a, the image forming unit 10b and the medium feeding unit 10c.

The communication unit 11 performs communication with the modality 200, the image storage/communication system 300 and the information processing apparatus 400 over the network 100 using, for example, TCP/IT (Transmission Control Protocol/ Internet Protocol).

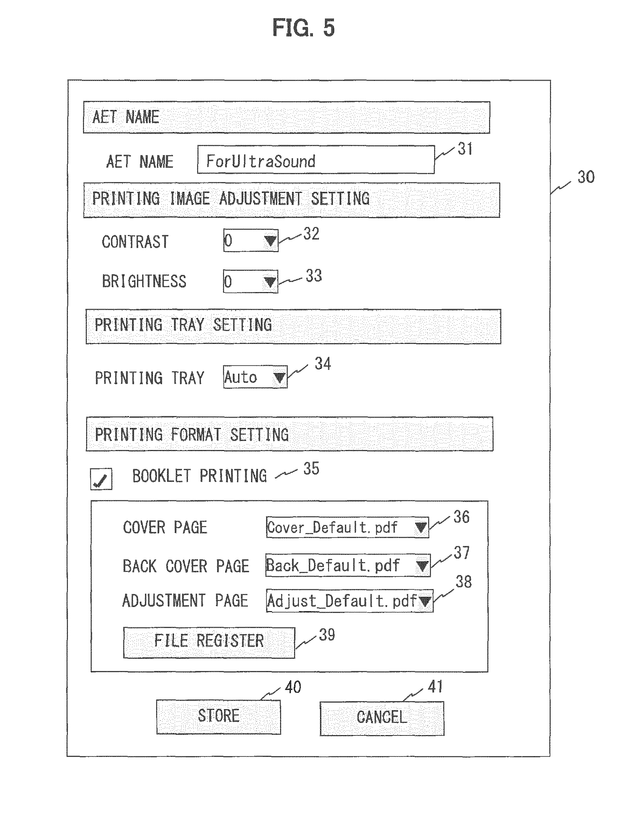

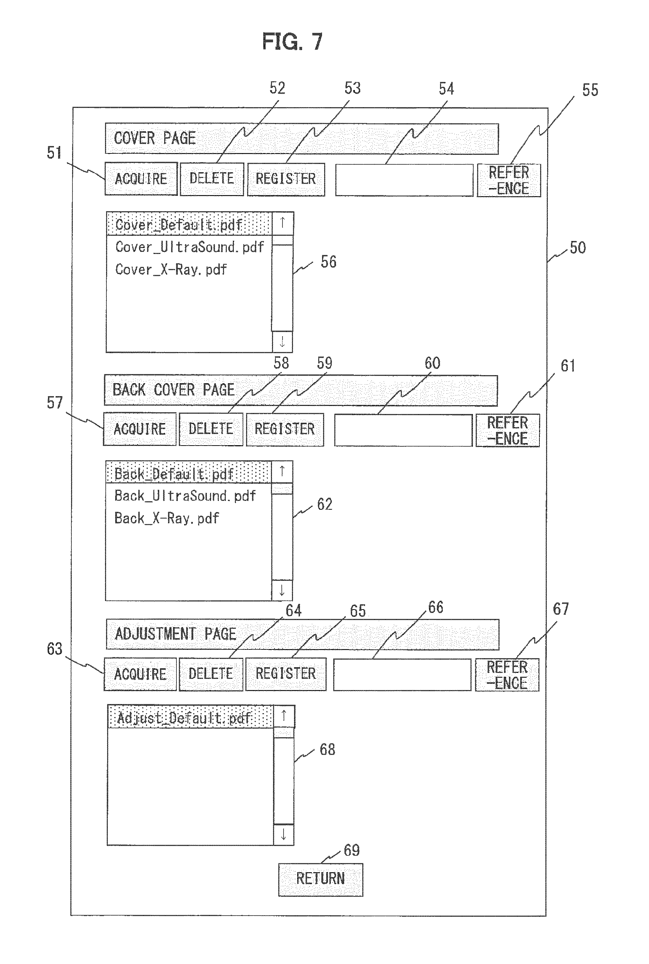

The web server unit 12 provides a web service to the web browser of the information processing apparatus 400 using HTTP (Hypertext Transfer Protocol) via the communication unit 11. This web service enables a user to operate the information processing apparatus 400 to perform setting of the AET (FIG. 5) and setting of image data for booklet printing (FIG. 7).

The AET setting unit 13 (i.e., a setting unit) stores AET setting data (set by the information processing apparatus 400 via the web service provided by the web server unit 12 as shown in FIG. 5) in the storage device 10a. As needed, the AET setting unit 13 deletes the AET setting data from the storage device 10a.

The booklet printing image data setting unit 14 (i.e., an image setting unit) stores image data for booklet printing (set by the information processing apparatus 400 via the web service provided by the web server unit 12 as shown in FIG. 7) in the storage device 10a. As needed, the booklet printing image data setting unit 14 deletes the image data from the storage device 10a.

The DICOM data reception unit 15 (i.e., a data reception unit) receives a service request (i.e., a request to print medical images) transmitted from an SCU (i.e., Service Class User) such as the modality 200 and the image storage/ communication system 300 along with specifying of the AET. Further, the DICOM data reception unit 15 establishes a session with the SCU, and receives the DICOM data transmitted from the SCU.

The page data creation unit 16 lays out medical image data included in the DICOM data (received by the DICOM data reception unit 15) on each page, and stores the data of each page in the storage device 10a as printing page data 101.

The printing job creation unit 17 creates a printing job based on the printing page data 101, AET setting data 102 and booklet printing image data 103 (described later) using PDL (Page Description Language).

The output unit 18 controls the image forming unit 10b and the medium feeding unit 10c based on the printing job outputted by the printing job creation unit 17 to print an image on a medium. In this regard, the page data creation unit 16, the printing job creation unit 17 and the output unit 18 constitute a printing processing unit.

The image forming unit 10b may use any printing method. However, it is preferred that the image forming unit 10b uses electrophotography in order to print high resolution medical image. In the case where the image forming unit 10b uses electrophotography, the image forming unit 10b includes an image bearing body such as a photosensitive body, an LED (Light Emitting Diode) that forms a latent image on a surface of the image bearing body, a developing unit that develops the latent image using a toner (i.e., a developer), a transfer unit that transfers the toner image to the medium, and a fixing unit that fixes the toner image to the medium.

The medium feeding unit 10c feeds the medium such as a paper stored in a printing tray to the image forming unit 10b according to instruction from the output unit 18 so that an image is formed on a first surface of the medium. In the case of a duplex printing, the medium feeding unit 10c turns the medium upside down after the image is formed on the first surface of the medium, and feeds the medium to the image forming unit 10b again so that another image is formed on a second surface of the medium.

With such a configuration, the image forming apparatus 10 functions as an SCP (Service Class Provider) that provides a service (i.e., printing of medical images) to the SCU such as a modality 200 and the image storage/communication system 300 in response to the service request from the SCU.

### <DICOM DATA>

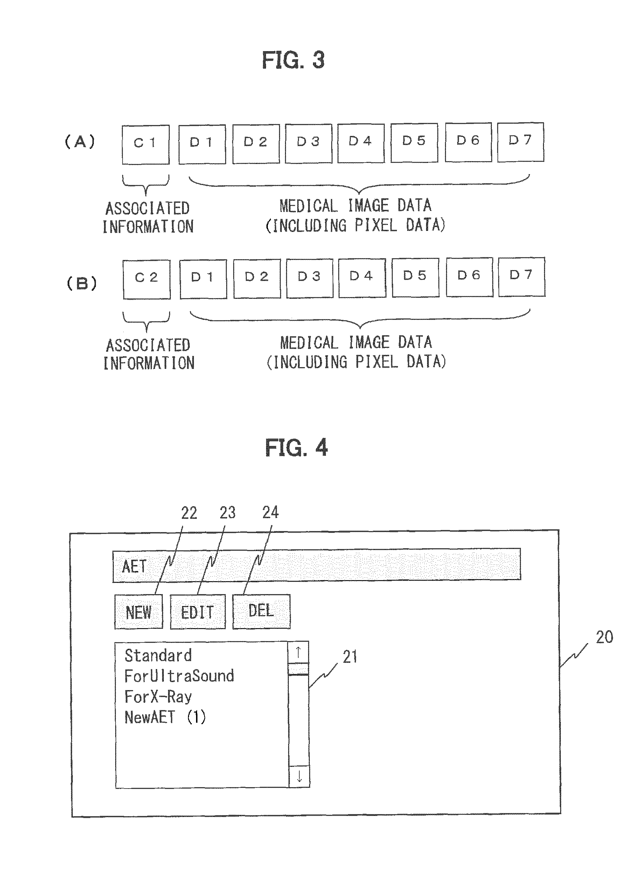

FIGS. 3A and 3B are schematic views showing examples of a main part of the DICOM data. The DICOM data shown in FIG. 3A is transmitted by the SCU when the SCU requests the SCP (the image forming apparatus 10) to print a medical image. The DICOM data includes pieces of medical image data D1 through Dn and associated information C1.

The pieces of medical image data D1 through Dn include pixel data obtained by converting images (taken by the modality 200 such as the ultrasound diagnosis apparatus) in accordance with the DICOM standard. The number of the pieces of medical image data included in the DICOM data may be 1 (n=1) or may be plural.

The associated information C1 includes printing-related information. The printing-related information includes a kind of the medium on which medical images are to be printed, a page size (for example, A4 size), layout information indicating how to lay out medical images on each page. The layout information indicates, for example, laying out (i.e., arranging) one image on each page, or laying out images in two rows and three columns (2 × 3) on each page.

In this regard, when the SCU requests the SCP to store medical data, the SCU transmits DICOM data shown in FIG. 3B. The DICOM data shown in FIG. 3B includes the pieces of medical image data D1 through D4 and associated information C2 regarding the medical data. Particularly, the associated information C2 includes information regarding a patient (i.e., patient information) such as a name and age of the patient, and a taking date of the medical image. Use of the DICOM data shown in FIG. 3B will be described in modification of the first embodiment.

### <SETTING OF AET>

Next, the setting of the AET will be described. The image forming apparatus 10 as the SCP is able to provide a plurality of AETs. The storage device 10a stores settings of the respective AETs as the AET setting data 102. The SCU (the modality 200 and the image storage/communication system 300) transmits a service request to the image forming apparatus 10 while specifying one of the AETs.

Information on the AET provided by the image forming apparatus 10 can be set by a user via the information processing apparatus 400. To be more specific, the user can perform the setting of the AET by accessing a URL provided by the web server unit 12 of the image forming apparatus 10 via the web browser of the information processing apparatus 400.

FIG. 4 is a schematic view showing an AET registration screen 20 according to the first embodiment. The AET registration screen 20 is displayed on a display portion of the information processing apparatus 400. The AET registration screen 20 includes an AET list 21, a new button 22, an edit button 23 and a delete button 24.

The AET list 21 displays a list of the registered AETs. For example, the AET that prints an image taken by the ultrasound diagnosis apparatus is assigned with a name (AET name) "ForUltraSound". The AET that prints an image taken by the X-ray imaging apparatus is assigned with a name (AET name) "ForX-ray".

The new button 22 is pressed for adding the AET having a unique name to the AET list 21. In an example shown in FIG. 4, the AET having a unique name "NewAET(1)" is added to the AET list 21. When the new button 22 is pressed again, the AET having an unique name "NewAET(2)" is added to the AET list 21.

The edit button 23 is pressed for changing the settings of the AET selected in the AET list 21. When the edit button 23 is pressed, the screen shifts to an AET edition screen 30 (FIG. 5). The delete button 24 is pressed for deleting the AET selected in the AET list 21.

FIG. 5 is a schematic view showing the AET edition screen 30 according to the first embodiment. The AET edition screen 30 shown in FIG. 5 is provided for editing (setting) the AET. The AET edition screen 30 is displayed on the display portion of the information processing apparatus 400 when the edit button 23 of the AET registration screen 20 (FIG. 4) is pressed.

The AET edition screen 30 includes an AET name 31 for displaying the AET name of the AET which is to be edit. The AET edition screen 30 further includes a contrast setting portion 32, a brightness setting portion 33, a printing tray setting portion 34, a booklet printing format setting portion 35, a cover page image setting portion 36, a back cover page image setting portion 37, and an adjustment image setting portion 38. The AET edition screen 30 further includes a file register button 39, a store button 40, and a cancel button 41.

The AET name 31 displays the AET name of the AET (i.e., the AET to be edited) selected in the AET list 21 of the AET registration screen 20. The AET name 31 is configured to allow character input so that the name displayed on the AET name 31 can be changed as needed.

The contrast setting portion 32 is used to set a contrast (i.e., a difference between brightness and darkness) of an image to be printed. To be more specific, the contrast setting portion 32 is configured so that the contrast can be adjusted within a range from -5 to +5. When a negative numerical value is set in the contrast setting portion 32, a degree of decrease in contrast increases as an absolute value of the numerical value increases. When a positive numerical value is set in the contrast setting portion 32, a degree of increase in contrast increases as an absolute value of the numerical value increases.

The brightness setting portion 33 is used to set a brightness of an image to be printed. To be more specific, the brightness setting portion 33 is configured so that the brightness can be adjusted within a range from -5 to +5. When a negative numerical value is set in the brightness setting portion 33, brightness of the image becomes dark as an absolute value of the numerical value increases. When a positive numerical value is set in the brightness setting portion 33, brightness of the image becomes bright as an absolute value of the numerical value increases.

The printing tray setting portion 34 is used to select a printing tray that stores media to be used, among a plurality of printing trays.

The booklet printing format setting portion 35 is used to set whether or not to perform booklet printing. A user can choose to perform booklet printing (i.e., printing in such a way that a booklet is formed by folding the printed medium) by entering a checkmark in a checkbox of the booklet printing format setting portion 35. A user can choose not to perform booklet printing by removing the checkmark from the checkbox of the booklet printing format setting portion 35.

When the booklet printing is selected by entering the checkmark in the checkbox of the booklet printing format setting portion 35, it is necessary to specify the printing tray storing the medium whose size is twice as large as a page on which the medical image is laid out. For example, if the medical image is printed on the page of A4 size, the size of the medium is A3.

The cover page image setting portion 36, the back cover page image setting portion 37 and the adjustment image setting portion 38 are used to set respective images for a cover page, a back cover page and an adjustment page in the case where the booklet printing is selected (i.e., in the case where the checkmark is entered in the checkbox of the booklet printing format setting portion 35).

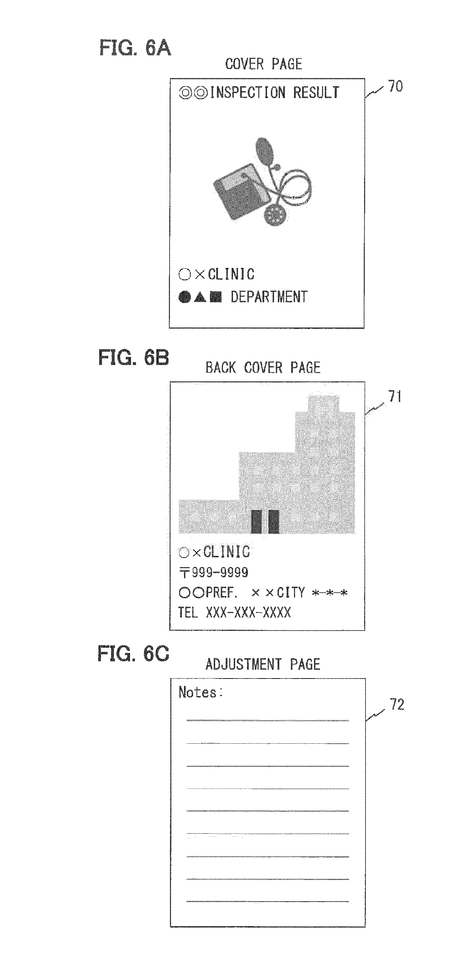

FIGS. 6A, 6B and 6C are examples of data of the cover page image 70 printed on the cover page, the back cover page image 71 printed on the back cover page, and the adjustment image 72 printed on the adjustment page.

The cover page image 70 is an image printed on a page that constitutes the cover page when the medium is folded into a booklet. The cover page image 70 includes character information corresponding to the AET such as a name of an inspection, a name of a hospital, a name of a medical department, a name of a doctor or the like. The cover page image 70 further includes a title image. The size of the cover page image 70 (for example, A4 size) is half the size of the medium.

The back cover page image 71 is an image printed on a page that constitutes the back cover page when the medium is folded into the booklet. The back cover page image 71 includes character information such as a name, an address, and a pilot telephone number of the hospital (i.e., information common to all medical departments). The back cover page image 71 further includes a title image. The size of the back cover page image 71 (for example, A4 size) is half the size of the medium.

The adjustment image 72 is an image printed on each adjustment page inserted so as to form the booklet. In order to obtain the booklet by folding the medium, it is necessary that four pages in total are printed on each medium having two surfaces (i.e., two sides). Therefore, it is necessary that the total number of the pages is multiple of 4. Accordingly, the number of the adjustment pages is set among 0, 1, 2 and 3 so that a summation of the number of the pages on which the medical images are to be printed, the number of the cover page and the back cover page (i.e., 2) and the number of the adjustment pages is equal to multiple of 4. In this example, the adjustment image 72 includes character information of "Notes", and further includes ruled lines as in a notebook. The size of the adjustment image 72 (for example, A4 size) is half the size of the medium, as with the cover page image 70 and the back cover page image 71.

In this regard, the image data shown in FIGS. 6A, 6B and 6C are merely examples. Other image data may be used as the cover page image 70, the back cover page image 71 and the adjustment image 72.

Referring back to FIG. 5, the file register button 39 is used to acquire or delete the image data registered in the image forming apparatus 10, or newly register the image data to the image forming apparatus 10, for each of the cover page image 70, the back cover page image 71 and the adjustment image 72 (FIGS. 6A, 6B and 6C).

The store button 40 is used to confirm settings which are set via the AET edition screen 30, and store the settings in the storage device 10a as the AET setting data 102. When the store button 40 is pressed, the settings which are set via the AET edition screen 30 are stored in the storage device 10a as the AET setting data 102, and then the screen shifts from the AET edition screen 30 (FIG. 5) to the AET registration screen 20 (FIG. 4).

In this regard, the settings which are set via the contrast setting portion 32 and the brightness setting portion 33 are stored as printing image adjustment settings 102a in the storage device 10a by the AET setting unit 13 (FIG. 2). The setting which is set via the printing tray setting portion 34 is stored as a printing tray setting 102b in the storage device 10a by the AET setting unit 13 (FIG. 2).

The setting which is set via the booklet printing format setting portion 35 is stored as a printing format setting 102c in the storage device 10a by the AET setting unit 13 (FIG. 2). The settings of the cover page image setting portion 36, the back cover page image setting portion 37 and the adjustment image setting portion 38 are stored as booklet printing image data file names 102d in the storage device 10a by the AET setting unit 13 (FIG. 2). The printing image adjustment settings 102a, the printing tray setting 102b, the printing format setting 102c and the booklet printing image data file names 102d constitute the AET setting data 102 (i.e., printing setting information).

The cancel button 41 is used to cancel the settings which are set via the AET edition screen 30. When the cancel button 41 is pressed, the settings which are set via the AET edition screen 30 are canceled, and the screen returns to the AET registration screen 20 (FIG. 4).

### <SETING OF BOOKLET PRINTING DATA>

FIG. 7 is a schematic view showing the booklet printing image data registration screen 50 according to the first embodiment. The booklet printing image data registration screen 50 is displayed on the display portion of the information processing apparatus 400 when the file register button 39 of the AET edition screen 30 (FIG. 5) is pressed.

The booklet printing image data registration screen 50 is used to acquire or delete the image data registered in the storage device 10a, or newly register the image data to the storage device 10a, for each of the cover page image 70, the back cover page image 71 and the adjustment image 72 (FIGS. 6A, 6B and 6C).

The booklet printing image data registration screen 50 includes an acquire button 51, a delete button 52, a register button 53, a cover page file name 54, a reference button 55, and a cover page image data registration list 56 for acquiring, deleting and newly registering the data of the cover page image 70.

The cover page image data registration list 56 displays a list of the cover page image data registered as the cover page image data 103a in the storage device 10a. In this example, default cover page image data, cover page image data for the ultrasound diagnosis apparatus, and cover page image data for the X-ray imaging apparatus are registered.

The acquire button 51 is used to confirm the selected cover page image data. When one of the cover page image data displayed in the cover page image data registration list 56 is selected, and the acquire button 51 is pressed, a file save dialog is displayed. With the file save dialog, a file can be acquired, and content thereof can be confirmed.

The delete button 52 is used to delete the selected cover page image data. When one of the cover page image data displayed on the cover page image data registration list 56 is selected, and the delete button 52 is pressed, the selected cover page image data is deleted. However, if there is an AET which is set to use the cover page image, the cover page image data is not deleted, and an error message is displayed.

The reference button 55 is used to specify an arbitrary file in the information processing apparatus 400 as new cover page image data. When the reference button 55 is pressed, a file open dialog is displayed, and an arbitrary file in the information processing apparatus 400 can be specified. When a file in the information processing apparatus 400 is specified, full path information of the specified file is displayed in the cover page file name 54.

The register button 53 is used to register the file displayed in the cover page file name 54. When the register button 53 is pressed, the file displayed in the cover page file name 54 is stored as the cover page image data 103a in the storage device 10a by the booklet printing image data setting unit 14. However, if information of the file displayed in the cover page file name 54 is invalid, if the file does not have a predetermined page size, if the number of the page is not 1, or if the file having the same name has already been registered, the file is not registered, and an error message is displayed.

The booklet printing image data registration screen 50 further includes an acquire button 57, a delete button 58, a register button 59, a back cover page file name 60, a reference button 61, and a back cover page image data registration list 62 for acquiring, deleting and newly registering the data of the back cover page image 71.

Functions of the acquire button 57, the delete button 58, the register button 59, the back cover page file name 60, the reference button 61 and the back cover page image data registration list 62 are substantially similar to those of the acquire button 51, the delete button 52, the register button 53, the cover page file name 54, the reference button 55 and the cover page image data registration list 56.

In this regard, the back cover page image data registration list 62 displays a list of the back cover page image data registered as the back cover page image data 103b in the storage device 10a. Further, when the register button 59 is pressed, the file displayed in the back cover page file name 60 is stored as the back cover page image data 103b in the storage device 10a by the booklet printing image data setting unit 14.

The booklet printing image data registration screen 50 further includes an acquire button 63, a delete button 64, a register button 65, an adjustment image file name 66, a reference button 67, and an adjustment image data registration list 68 for acquiring, deleting and newly registering the data of the adjustment image 72.

Functions of the acquire button 63, the delete button 64, the register button 65, the adjustment image file name 66, the reference button 67 and the adjustment image data registration list 68 are substantially similar to those of the acquire button 51, the delete button 52, the register button 53, the cover page file name 54, the reference button 55 and the cover page image data registration list' 56.

In this regard, the adjustment image data registration list 68 displays a list of the adjustment image data registered as the adjustment image data 103c in the storage device 10a. Further, when the register button 65 is pressed, the file displayed in the adjustment image file name 66 is stored as the adjustment image data 103c in the storage device 10a by the booklet printing image data setting unit 14.

The booklet printing image data registration screen 50 further includes a return button 69. When the return button 69 is pressed, the screen shifts from the booklet printing image data registration screen 50 to the AET edition screen 30 (FIG. 5). This completes the setting of the AETs provided by the image forming apparatus 10 as the SCP.

### <OPERATION OF IMAGE FORMING APPARATUS>

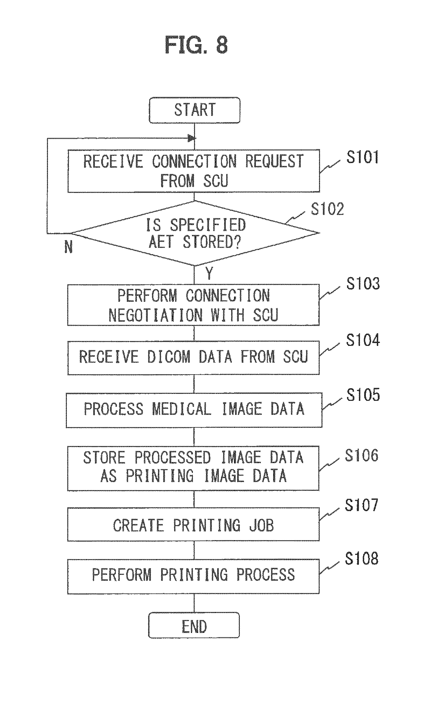

An operation of the image forming apparatus 10 according to the first embodiment in response to a service request (i.e., a request to print a medical image) from the SCU will be described. FIG. 8 is a flowchart showing a basic operation of the image forming apparatus 10 in response to the service request from the SCU.

In this regard, there is a case where the modality 200 (operated by a doctor) takes a medical image, and transmits DICOM data including medical image data to the image forming apparatus 10. There is another case where the information processing apparatus 400 causes the image storage/ communication system 300 to transmit DICOM data (including medical image data selected from the database) to the image forming apparatus 10.

The SCU (i.e., the modality 200 and the image storage/ communication system 300) transmits a connection request to the image forming apparatus 10 over the network 100 using TCP/IP, while specifying an IP address and a port number of the image forming apparatus 10 and also specifying one of the AETs.

The DICOM data reception unit 15 of the image forming apparatus 10 receives the connection request from the SCU via the communication unit 11 (step S101). The DICOM data reception unit 15 checks whether the AET specified in the connection request is stored in the storage device 10a as the AET setting data 102 (step S102).

If the AET is stored in the storage device 10a (Y in step S102), the DICOM data reception unit 15 performs connection negotiation with the SCU based on the DICOM standard (step S103), and receives the DICOM data including the medical image data and the associated information (step S104). The DICOM data reception unit 15 passes the received medical image data and the associated information to the page data creation unit 16.

The page data creation unit 16 reads the AET setting data 102 corresponding to the AET specified in the connection request from the storage device 10a. Further, the page data creation unit 16 processes the medical image data based on the printing image adjustment settings 102a (i.e., settings set by the contrast setting portion 32 and the brightness setting portion 33) of the AET setting data 102. Then, the page data creation unit 16 lays out the medical image data on each page based on the printing-related information (more specifically, the layout information) included in the associated information C1 (FIG. 3A) of the DICOM data (step S105).

In this regard, the layout information is information regarding how to lay out (i.e., arrange) the medical image on each page (i.e., a page layout). For example, the layout information indicates laying out one medical image on each page, or laying out medical images in two rows and three columns (2×3) on each page. The page data creation unit 16 processes the medical image data and lays out the medical image data on each page, and obtains pieces of page data. The page data creation unit 16 adds index numbers (in order of page number) to the respective pieces of the page data, and stores the pieces of the page data in the storage device 10a as printing page data 101 (step S106).

Here, a piece of the page data whose index number is "n" is expressed as "page data (n)". Further, the page on which the medical image data is laid out is referred to as a "medical image page".

For example, when the DICOM data includes 5 pieces of the medical image data, and the layout information indicates laying out one medical image on each page, the page data corresponding to 5 pages, i.e., the page data (1) through the page data (5) are stored in the storage device 10a.

Further, when the DICOM data includes 7 pieces of the medical image data, and the layout information indicates laying out medical images in two rows and three columns (2×3) on each page, the page data corresponding to 2 pages, i.e., the page data (1) and the page data (2) are stored in the storage device 10a. This is because 6 pieces of the medical image data are laid out on a first page, and 1 piece of the medical image data is laid out on a second page.

After the page data creation unit 16 creates and stores the printing page data 101, the printing job creation unit 17 creates a printing job using PDL based on the printing page data 101, the AET setting data 102 and the booklet printing image data 103 using PDL (step S107).

That is, the printing job creation unit 17 reads the AET setting data 102 for the AET specified in the connection request from the storage device 10a. If the booklet printing is not selected in the printing format setting 102c of the AET setting data 102, the printing job creation unit 17 creates a printing job in normal (usual) format without changing the page data created by the page data creation unit 16. In contrast, if the booklet printing is selected in the printing format setting 102c, the printing job creation unit 17 reads the booklet printing image data file names 102d, the cover page image data 103a, the back cover page image data 103b and the adjustment image data 103c from the storage device 10a, and creates a printing job in the booklet printing format.

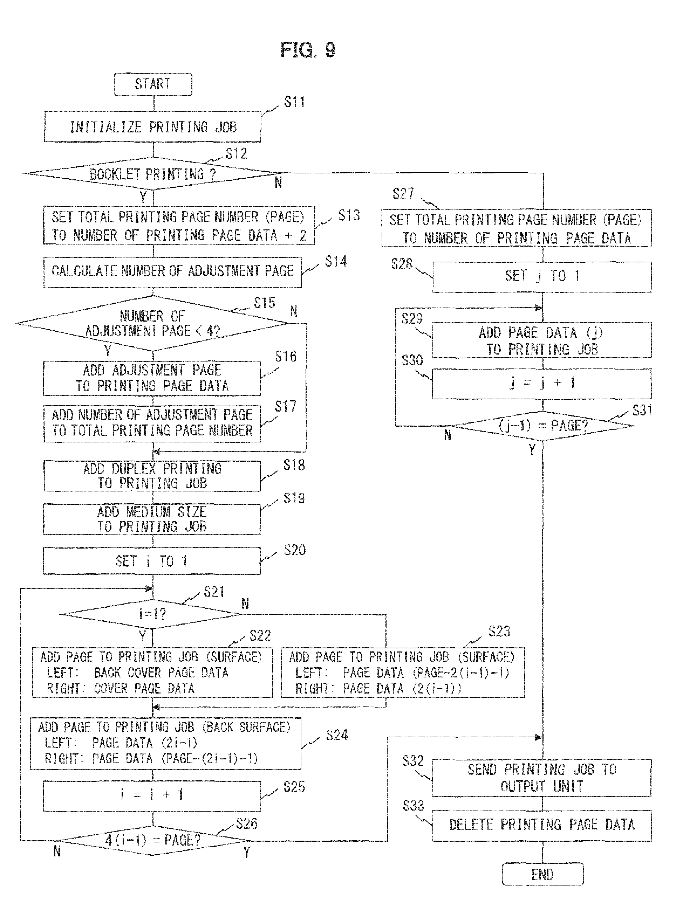

Here, processing of the printing job creation unit 17 will be described. FIG. 9 is a flowchart showing the processing of the printing job creation unit 17 (i.e., processing to create the printing job) of the first embodiment.

The printing job creation unit 17 initializes the printing job, and adds a regular PDL to the printing job (step S11). The printing job is preferably created on a memory in terms of processing speed. However, the printing job may be created on the storage device 10a, if it is difficult to mount a memory with a large capacity on the image forming apparatus 10.

Next, the printing job creation unit 17 reads the printing format setting 102c of the AET setting data 102 (corresponding to the specified AET) from the storage device 10a, and checks whether the booklet print is selected or not (step S12).

If the booklet printing is selected (Y in step S12), the printing job creation unit 17 performs the following steps S13 through S26, S32 and S33.

First, the printing job creation unit 17 calculates a total printing page number (PAGE) by adding the number of the medical image pages and the number of the cover page and the back cover page (step S13). Since the page data creation unit 16 creates the pieces of page data (i.e., the printing page data 101) in a page unit, the number of the medical image pages can be obtained by counting the number of the pieces of the page data. The total printing page number (PAGE) can be obtained by adding the number of the medical image pages to the number of the cover page and the back cover page (i.e., 2).

In the booklet printing (in which the medium is folded at the center to form a booklet), it is necessary that the total printing page number is multiple of 4. Therefore, if the total printing page number (PAGE) determined in step S13 is not multiple of 4, it is necessary to insert the adjustment pages between the last medical image page and the back cover page.

Therefore, the printing job creation unit 17 calculates the number of the adjustment pages by subtracting a reminder of dividing the total printing page number (PAGE) determined in step S13 by 4 from 4 (i.e., a fixed value), and obtains a value of 1, 2, 3 or 4 (step S14).

Next, the printing job creation unit 17 checks whether the value obtained in step S14 is less than 4 or not (step S15). If the value is 4 (N in step S15), the total printing page number (PAGE) determined in step S13 is already multiple of 4, and it is not necessary to insert the adjustment page. Therefore, the printing job creation unit 17 proceeds to step S18 described later. If the value is less than 4 (Y in step S15), it is necessary to insert the adjustment pages in such a manner that the number of the adjustment pages equals to the value. In this case, the printing job creation unit 17 proceeds to step S16.

In step S16, the printing job creation unit 17 reads the adjustment image data 103c from the storage device 10a, and adds the same number of the adjustment pages as the value determined in step S14 to the printing page data 101 stored in the storage device 10a. As a result, the printing page data 101 includes the medical image data pages (pages on which medical images are laid out) and the adjustment pages.

For example, if the page data creation unit 16 creates the pieces of the page data corresponding to "n" pages, i.e., the page data (1) through the page data (n), and if the number of the adjustment pages determined in step S14 is 3, the printing job creation unit 17 adds the page data (n+1), the page data (n+2) and the page data (n+3) to the page data (1) through the page data (n).

Next, the printing job creation unit 17 updates the total printing page number (PAGE) by adding the number of the adjustment pages to the total printing page number (i.e., a summation of the number of the medical image pages and the number of the cover page and the back cover page) determined in step S13 (step S17).

Next, the printing job creation unit 17 adds PDL indicating the duplex printing to the printing job (step S18).

Next, the printing job creation unit 17 reds the printing tray setting 102b from the storage device 10a, and adds PDL indicating the size (for example, A3 size) of the medium (on which printing is to be performed) to the printing job (step S19). The size of the medium is twice as large as the size of the page data (for example, A4).

In the subsequent steps S20 through S26, the printing job creation unit 17 sorts the pieces of the page data, and lays out the pieces of the page data on a surface (i.e., a first surface) and a back surface (i.e., a second surface) of each medium.

That is, the printing page data 101 includes pieces of the page data including the medical image data (i.e., the page data (1) through the page data (n)), and the pieces of the page data for adjustment (for example, the page data (n+1) through the page data (n+3)). These pieces of the page data need be sorted for the booklet printing.

The above described total printing page number (PAGE) is the summation of the number (n) of the medical image pages, the number (2) of the cover page and the back cover page, and the number of the adjustment pages. From the processing in steps S15 through S17, it is ensured that the total printing page number (PAGE) is multiple of 4.

In order to perform booklet printing, the pieces of the page data, cover page data (i.e., data of the cover page) and back cover page data (i.e., data of the back cover page) are sorted in an order of the back cover page data, the cover page data, the page data (1), the page data (PAGE-1), the page data (PAGE-2), the page data (2), the page data (3), the page data (PAGE-3), page data (PAGE-4), etc.

Among the sorted pieces of the page data, the cover page data and the back cover page data, every two pieces are laid out on a left half and a right half of the same surface of the medium (so that each page has a 2-up layout) in a sorted order. Therefore, the printing job creation unit 17 first sets a variable "i" indicating an order of the medium being processed to 1 (i.e., an initial value) (step S20).

Next, the printing job creation unit 17 determines whether the currently processed medium is a first medium or not based on whether the variable i is 1 or not (step S21). If the currently processed medium is the first medium, i.e., if the variable i is 1 (Y in step S21), the printing job creation unit 17 proceeds to step S22. If the current processing is not the processing of the first medium, i.e., if the variable i is greater than 1 (N in step S21), the printing job creation unit 17 proceeds to step S23.

In step S22, the printing job creation unit 17 creates a surface (i.e., a first surface) of a first medium, i.e., a page corresponding to an outermost surface of a booklet. To be more specific, the printing job creation unit 17 lays out the back cover page image data 103b (read from the storage device 10a) on the left half of the surface of the first medium, and lays out the cover page image data 103a (read from the storage device 10a) on the right half of the surface of the first medium. The printing job creation unit 17 adds the resulting data to the printing job data.

In step S23, the printing job creation unit 17 creates a surface of a second or subsequent medium (i.e., a medium folded inside when two or more media are folded to form a booklet), i.e., an i-th medium (i is greater than 1 in step S23). To be more specific, the printing job creation unit 17 lays out the page data (PAGE-2(i-1)-1) on the left half of the surface of the i-th medium, and lays out the page data (2(i-1)) on the right half of the surface of the i-th medium. The printing job creation unit 17 adds the resulting data to the printing job data.

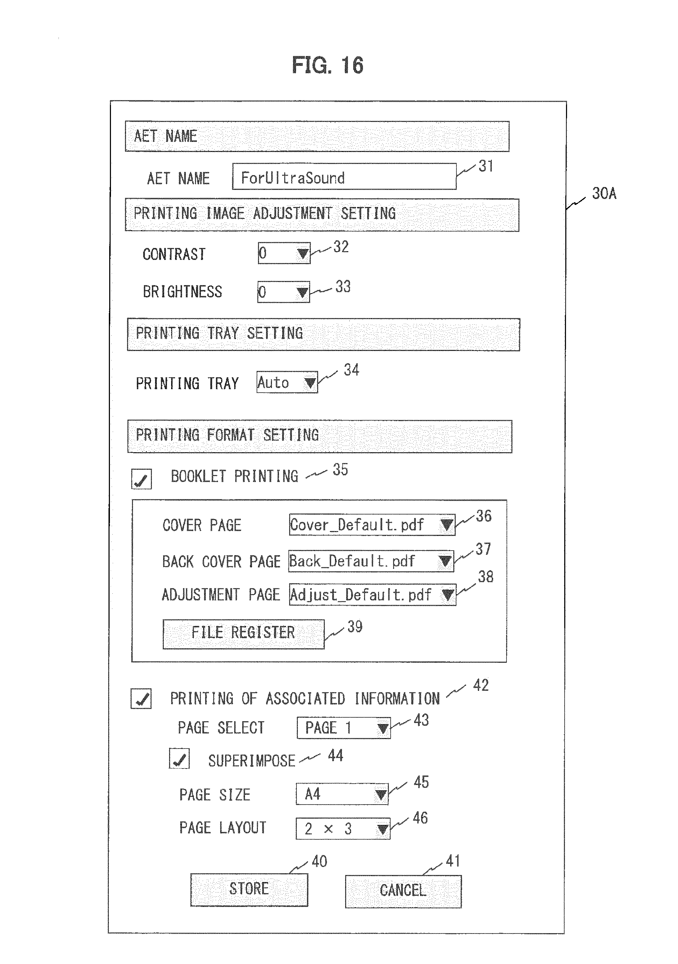

As described in relation to FIG. 16, when the index number of the page data (for example, 2(i-1)) exceeds the number ("n") of the medical image pages, the adjustment page is laid out.

When the step S22 or S23 is completed, the printing job creation unit 17 proceeds to step S24.

In step S24, the printing job creation unit 17 creates a back surface (i.e., a second surface) of the first or subsequent medium, i.e., an i-th medium (i is 1 or greater in step S24). The back surface is a surface of the medium facing inward when the medium is folded into booklet form. To be more specific, the printing job creation unit 17 lays out the page data (2i-1) on the left half of the back surface of the i-th medium, and lays out the page data (PAGE-(2i-1)-1) on the right half of the back surface of the i-th medium. The printing job creation unit 17 adds the resulting data to the printing job data.

Next, the printing job creation unit 17 adds 1 to the variable "i" indicating the medium which is being processed (step S25).

Next, the printing job creation unit 17 determines whether the processing for all pages is completed or not (step S26). As described above, four pieces of the page data (corresponding to four pages) are allocated to each medium. Therefore, the printing job creation unit 17 determines whether a value (i.e., 4(i-1)) obtained by subtracting 1 from the variable "i" and multiplying the result by 4 reaches the printing page total number (PAGE). If the processing for all pages is not yet completed (N in step S26), the printing job creation unit 17 returns to step S21. If the processing for all pages is completed (Y in step S26), the printing job creation unit 17 proceeds to step S32.

In step S32, the printing job creation unit 17 sends the printing job created in steps S22 through S24 to the output unit 18.

Then, the printing job creation unit 17 deletes the printing page data 101 having been processed from the storage device 10a (step S33).

In the above described step S12, if the booklet printing is not selected (N in step S12), the printing job creation unit 17 lays out one piece of the page data on one surface of each medium. The printing job creation unit 17 does not add the cover page, the back cover page or the adjustment page.

In this case, the printing job creation unit 17 sets the total printing page number (PAGE) to the number (n) of the pieces of the page data of the printing page data 101 (step S27). Next, the printing job creation unit 17 sets a variable "j" indicating an order of the medium being processed to 1 (i.e., an initial value) (step S28).

Next, the printing job creation unit 17 adds the page data (j) of the printing page data 101 to the printing job (step S29). Next, the printing job creation unit 17 adds 1 to the variable j (step S30).

Next, the printing job creation unit 17 determines whether the processing of all pages is completed or not (step S31). This is determined based on whether a value obtained by subtracting 1 from the variable j reaches the total printing page number (PAGE) determined in step S27.

If the processing for all pages is not yet completed (N in step S31), the printing job creation unit 17 returns to step S29. If the processing for all pages is completed (Y in step S31), the printing job creation unit 17 proceeds to step S32, and sends the printing job to the output unit 18.

Referring back to FIG. 8, the output unit 18 receives the printing job from the printing job creation unit 17, and controls the image forming unit 10b and the medium feeding unit 10c to perform printing on the medium in the booklet printing format (i.e., duplex and 2-up printing) or in the normal printing format according to the printing job (step S108).

### <PRINTING RESULT>

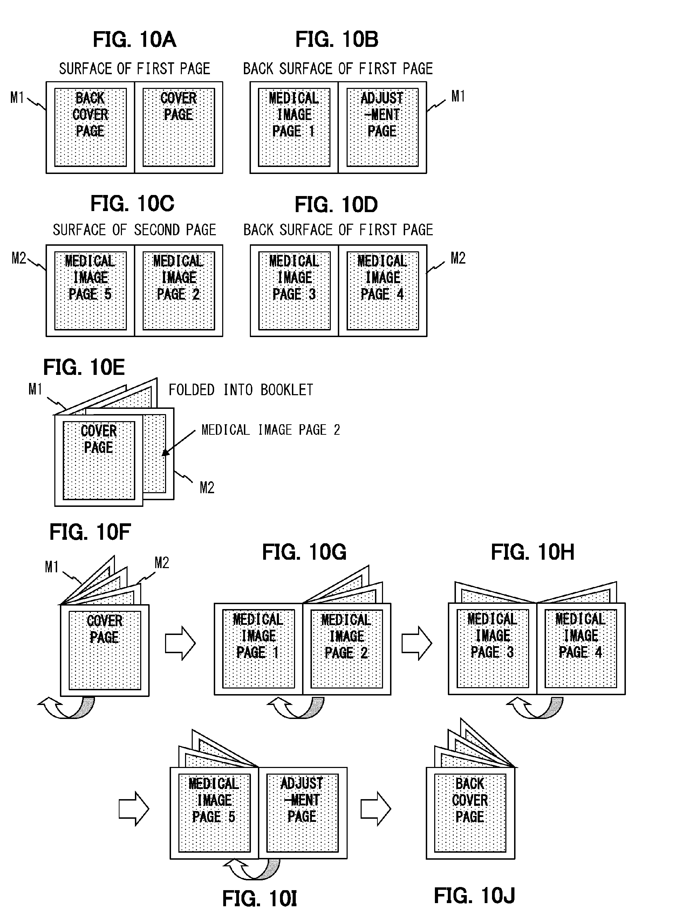

FIGS. 10A through 10J are schematic views showing a printing result in the booklet printing format when the number of the medical image page is 5. In this case, one adjustment page is inserted, and the number of pieces of the printing page data is 6.

First, as shown in FIG. 10A, the back cover page is printed on the left half of the surface of the first medium (shown by mark M1), and the cover page is printed on the right half of the surface of the first medium M1 (step S22 in FIG. 9). Further, as shown in FIG. 10B, a first medical image page is printed on the left half of the back surface of the first medium M1, and the adjustment page is printed on the right half of the back surface of the first medium M1 (step S24 in FIG. 9).

As shown in FIG. 10C, a fifth medical image page is printed on the left half of the surface of the second medium (shown by mark M2), and a second medical image page is printed on the right half of the surface of the second medium M2 (step S23 in FIG. 9). Further, as shown in FIG. 10D, a third medical image page is printed on the left half of the back surface of the second medium M2, and a fourth medical image page is printed on the right half of the back surface of the second medium M2 (step S24 in FIG. 9).

After printing, the first medium M1 and the second medium M2 are respectively folded at the center, and are overlapped so that the first medium M1 is on outside and the second medium M2 is on inside as shown in FIG. 10E.

Then, the first medium M1 and the second medium M2 are fixed to each other using a stapler or the like, so that a booklet as shown in FIG. 10F is obtained. In this state, the cover page printed on a first page of the booklet can be seen.

When the cover page is turned, the first medical image page is printed on the left page, and the second medical image page is printed on the right page as shown in FIG. 10G. When the next page is turned, the third medical image page is printed on the left page, and the fourth medical image page is printed on the right page as shown in FIG. 10H.

When the next page is turned, the fifth medical image page is printed on the left page, and the adjustment page is printed on the right page as shown in FIG. 10I. When the last page is turned, the back cover page printed on a last page of the booklet can be seen as shown in FIG. 10J.

In this way, the cover page and the back cover page are printed on the surface (i.e., a first surface) of the medium, and the pages (i.e., the medical image pages) including the medical images are printed on the back surface (i.e., a second surface) of the medium in sorted order suitable for booklet printing format. Therefore, the booklet can be made by folding the medium, and the medical images are printed on inner pages.

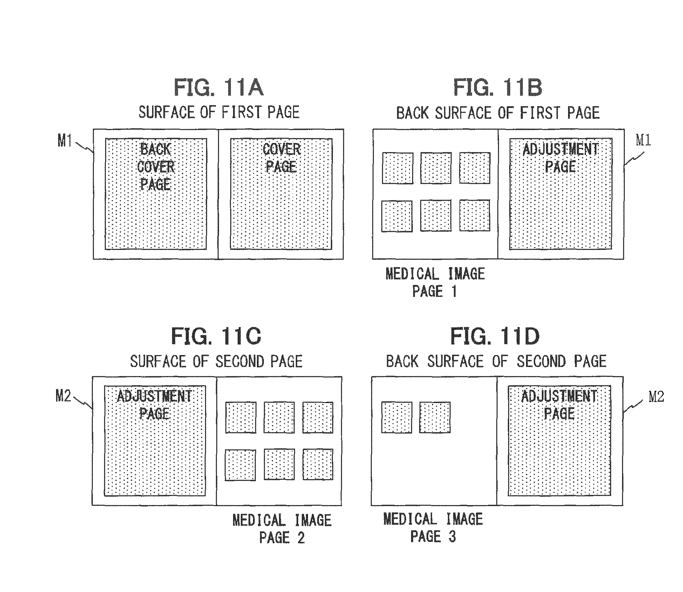

In the example shown in FIGS. 10A through 10J, one medical image is printed on each page. However, it is also possible to print a plurality of medical images on each page. FIGS. 11A through 11D show a printing result in the booklet printing format when the medical images are arranged in two rows and three columns (2×3) on each page. The number of the pieces of the medical image data is 14. In this case, the number of the medical image pages is 3, and the number of the adjustment pages to be inserted is 3. Therefore, the number of pieces of the printing page data is 6.

The surface of the first medium (shown by mark M1) shown in FIG. 11A is the same as that shown in FIG. 10A. In FIG. 11B, the medical images are printed in two rows and three columns (2x3) on the left half of the back surface of the first medium M1 as the first medical image page. The right half of the back surface of the first medium is the same as that shown in FIG. 10B.

In FIG. 11C, the adjustment page is printed on the left half of the surface of the second medium (shown by mark M2), and the medical images are printed in two rows and three columns (2×3) on the right half of the surface of the second medium M2 as the second medical image page. In FIG. 11D, the remaining two medical images are printed on the left half of the back surface of the second medium M2 as the third medical image page, and the adjustment page is printed on the right half of the back surface of the second medium M2.

After printing, the first medium M1 and the second medium M2 are respectively folded at the center, and are overlapped so that the first medium M1 is on outside and the second medium M2 is on inside. As a result, the booklet with medical images printed on inner pages can be made.

In examples shown in FIGS. 10A through 10J and FIGS. 11A through 11D, a plurality of media (for example, the medium M1 and the medium M2) are overlapped. However, if the number of the medical image page is 1 or 2, all of the medical images can be printed on a surface (in one page or two pages) of the medium. In such a case, a booklet is made by folding only one medium.

### <EFFECTS OF FIRST EMBODIMENT>

As described above, according to the first embodiment of the present invention, when the DICOM data reception unit 15 receives the DICOM data (i.e., the medical data) along with the specifying of the AET, the printing processing unit (i.e., the page data creation unit 16, the printing job creation unit 17 and the output unit 18) prints the cover page and the back cover page on the surface (i.e., the first surface) of the medium, and lays out and prints the page including the medical image on the back surface (i.e., the second surface) of the medium. Therefore, by folding the medium, the booklet with medical image printed on the inner page can be made. As a result, the medical image can be prevented from seen by another person, and privacy protection can be ensured. Further, since it is not necessary to put the medium into an envelope, cost can be reduced. Further, since the cover page and the back cover page are printed in the same operation for printing the medical image, operation efficiency can be enhanced.

Further, when the number of pages each including at least one medical image is two or more, the pages are printed in sorted order according to booklet printing format. Therefore, readability of the medical images on the respective pages of the booklet can be ensured.

Furthermore, when the summation of the number of the cover page, the back cover page and the medical image page is not multiple of 4, the adjustment page is inserted. The number of the adjustment page equals to a number obtained by subtracting a reminder of dividing the summation by 4 from 4. Therefore, the booklet format can be ensured.

Moreover, the printing processing unit performs printing based on the information (more specifically, the printing-related information included in the associated information C1) included in the DICOM data. Therefore, printing can be performed in a format according to the request from the SCU.

Further, the storage device 10a stores pieces of the image data for creating the cover page, the back cover page and the adjustment page for each of the plurality of the AET. Therefore, the booklet can be made according to the request from the SCU.

Furthermore, the setting of the AET setting data, and the setting of the cover page image, back cover page image and the adjustment image can be performed using the web service. Therefore, it becomes possible to correspond to various requests from the SCU.

### MODIFICATION.

Next, a modification of the first embodiment of the present invention will be described. In this modification, the DICOM data transmitted by the SCU includes the associated information C2 (FIG. 3B) including information regarding the medical data. Particularly, the associated information C2 (also referred to as attribute information) includes patient information such as a name and age of the patient, and a taking date of the medical image. In this modification, the image forming apparatus extracts the associated information from the received DICOM data, and prints the associated information.

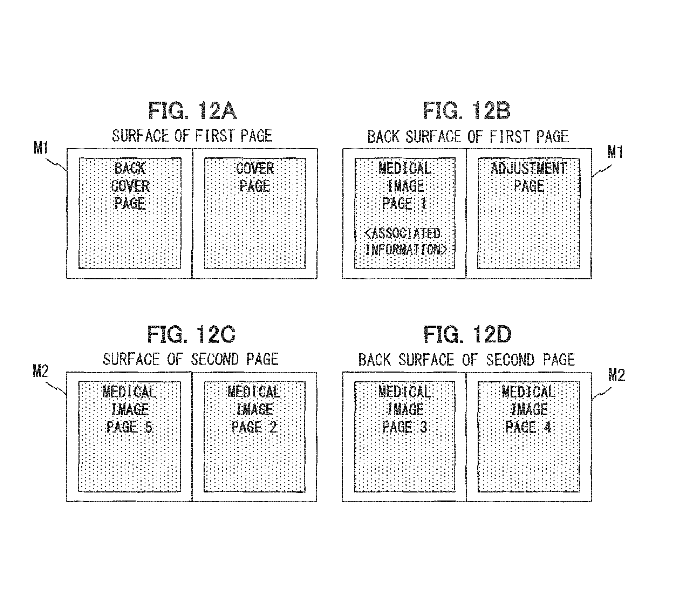

FIGS. 12A through 12D shows an example of a printing result when the associated information extracted from the DICOM data is printed. In this example, one medical image is printed on one page as is the case with the example shown in FIGS. 10A through 10J. The number of the medical image pages is 5, and the number of the adjustment page is 1. That is, the number (n) of the pieces of the printing page data 101 is 6.

In this example, the associated information is printed on the first medical image page (i.e., the left half of the back surface of the first medium) as shown in FIGS. 12B. Further, in this example, the associated information is superimposed on the medical image. The cover page, the back cover page and other medical image pages shown in FIGS. 12A, 12C and 12D are the same as those shown in FIGS. 10A, 10C and 10D.

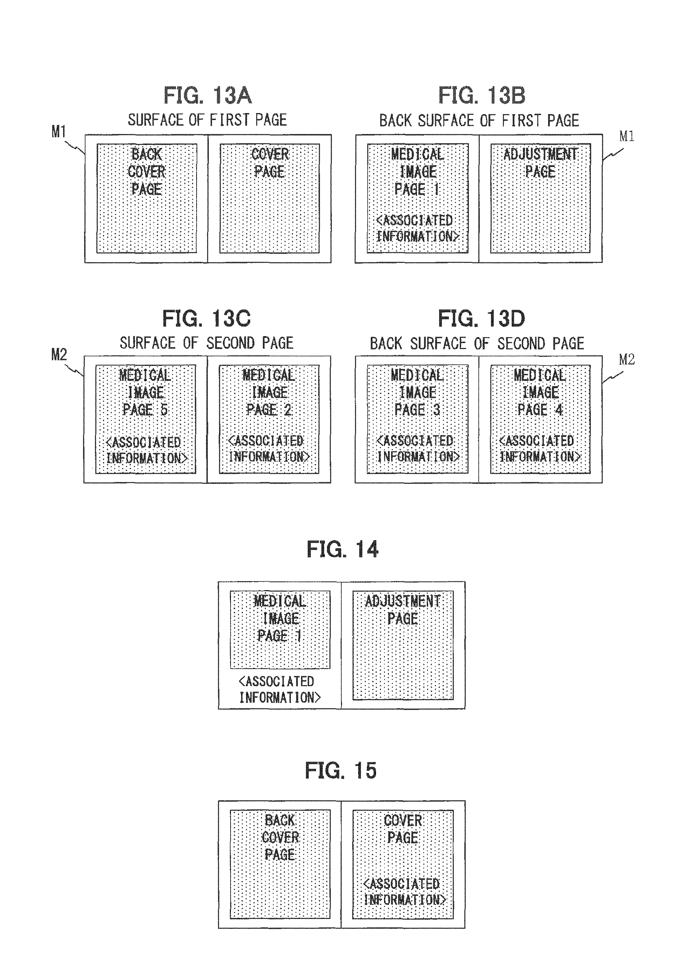

In the example shown in FIGS. 12A through 12D, the associated information is printed on the first medical image page. However, the associated information may be printed on another page. Further, the associated information may be printed on all medical image pages as shown in FIGS. 13A through 13D.

Further, as shown in FIG. 14, the associated information may be printed on a region of the medical image page where the medical image is not printed. Furthermore, as shown in FIG. 15, the associated information may be printed on the cover page or the back cover page.

FIG. 16 is a schematic view showing the AET edition screen 30A according to the modification. In this modification, whether or not to perform the printing of the associated information can be set using the AET edition screen 30A. Further, a page on which the associated information is to be printed can be set using the AET edition screen 30A. Furthermore, whether or not to superimpose the associated information on the medical image can be set using the AET edition screen 30A.

The AET edition screen 30A shown in FIG. 16 includes a setting portion 42 for setting whether or not to perform the printing of the associated information, a setting portion 43 for setting a page on which the associated information is to be printed, and a setting portion 44 for setting whether or not to superimpose the associated information on the medical image, in addition to the AET edition screen 30 shown in FIG. 5.

The setting portion 43 for setting the page on which the associated information is to be printed is constituted by a scroll bar. One or more of the cover page, the first through n-th medical image pages and the back cover page can be selected in the setting portion 44. The setting portion 44 may be configured to also allow selection of the adjustment page.

By entering a checkmark in a checkbox of the setting portion 42, and selecting one or more of the pages in the setting portion 43 of the AET edition screen 30A shown in FIG. 16, the associated information is printed on the selected page. Further, by entering a checkmark in a checkbox of the setting portion 42, the associated information is superimposed on the medical image.

In this modification, the associated information C1 (FIG. 3A) including the printing-related information is not included in the DICOM data, and therefore it is preferred to set the printing-related information using the AET edition screen 30A. For this reason, the AET edition screen 30A further includes a setting portion 45 for setting the page size, and a setting portion 46 for setting the page layout.

Each of the setting portions 45 and 46 is constituted by a scroll bar. The setting portion 45 is configured to allow selection of one of a plurality of page sizes, for example, A4 size, B4 size and the like. The setting portion 46 is configured to allow selection of one of a plurality of layouts, for example, 1 (i.e., laying out one medical image in each page) or 2×3 (i.e. laying out medical images in two rows and three columns in each page).

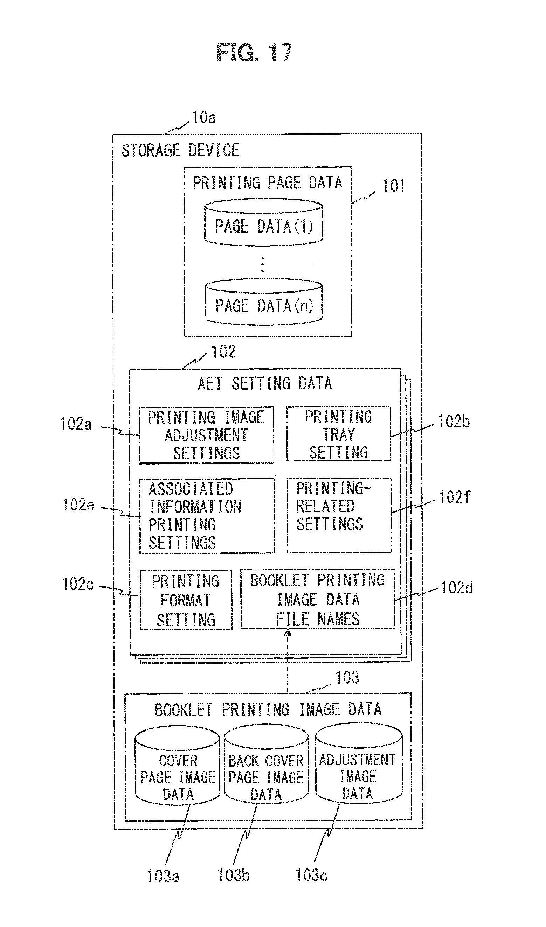

FIG. 17 is a block diagram showing the storage device 10a of the image forming apparatus 10 of the modification. The storage device 10a shown in FIG. 17 stores the printing image adjustment settings 102a, the printing tray setting 102b, the printing format setting 102c and the booklet printing image data file names 102d described in the first embodiment. The storage device 10a shown in FIG. 17 further stores the settings which are set via the setting portions 42, 43 and 44 of the AET edition screen 30A (FIG. 16) as associated information printing settings 102e. The storage device 10a shown in FIG. 17 further stores the settings which are set via the setting portions 45 and 46 of the AET edition screen 30A (FIG. 16) as printing-related information settings 102f.

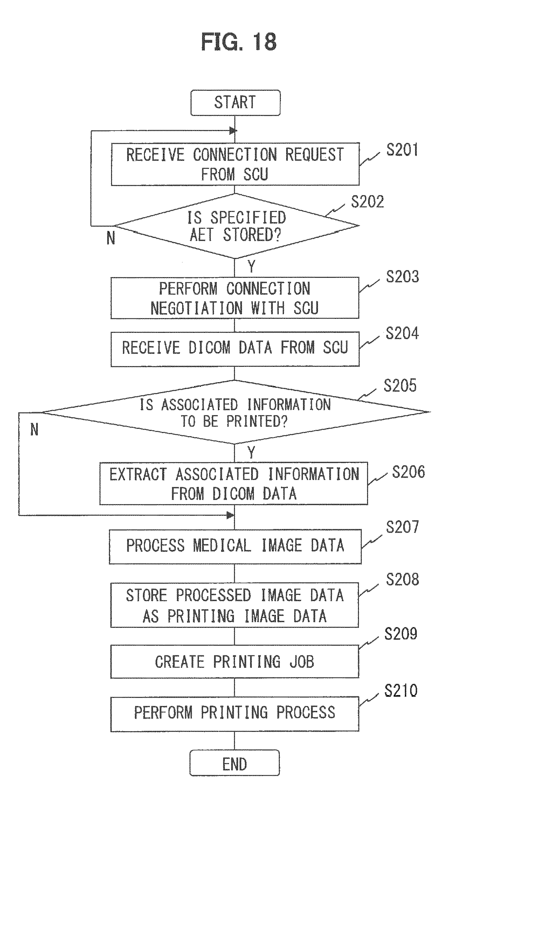

FIG. 18 is a flowchart showing a basic operation of the image forming apparatus 10 of the modification. In the flowchart shown in FIG. 18, the steps S201 through S204 are the same as those of steps S101 through S104 of the flowchart shown in FIG. 8.

In step S205, the page data creation unit 16 reads the associated information printing settings 102e from the storage device 10a, and determines whether or not to perform the printing of the associated information. When the page data creation unit 16 determines to perform the printing of the associated information (Y in step S205), the page data creation unit 16 extracts the associated information from the DICOM data (S206).

In the subsequent step S207, the page data creation unit 16 processes the medical images and lays out the medical images on each page as described in relation to step S15 shown in FIG. 8. In this step S207, the page data creation unit 16 creates printing page data by adding the associated information to the selected page based on the associated information printing settings 102e and the printing-related information settings 102f which are read from the storage device 10a. The subsequent steps S208 through S210 are the same as those of steps S106 through S108 shown in FIG. 8.

According to the modification of the first embodiment, the associated information (for example, the patient information) included in the DICOM data is printed. Therefore, information provided to the patient can be enriched.

In the above described first embodiment and modification, the printing is performed on the medium having a size twice as large as the predetermined size the medical image page. However, it is also possible that the size of the medium is selectable, and the size of the medical image page can be enlarged or reduced according to the size of the medium, so that a booklet of an arbitrary size can be made.

While the preferred embodiments of the present invention have been illustrated in detail, it should be apparent that modifications and improvements may be made to the invention without departing from the spirit and scope of the invention as described in the following claims.

## Claims

1. An image forming apparatus comprising:
a data reception unit (15) that receives medical data including medical image data transmitted by SCU (Service Class User) (200, 300) in accordance with DICOM (Digital Imaging and Communications in Medicine) standard along with specifying of an AET (Application Entity Title); and
a printing processing unit (16, 17, 18) that prints a cover page and a back cover page on a first surface of a medium, and lays out and prints at least one page including a medical image on a second surface of the medium opposite to the first surface based on the specified AET.

2. The image forming apparatus according to claim 1, wherein when the number of pages each including at least one medical image is two or more, the printing processing unit (16, 17, 18) sorts the pages according to a booklet printing format.

3. The image forming apparatus according to claim 1 or 2, wherein when a summation of the number of the cover page, the back cover page and the page including at least one medical image is not equal to multiple of 4, the printing processing unit (16, 17, 18) inserts at least one adjustment page, the number of the adjustment page being equal to a value obtained by subtracting a reminder of dividing the summation divided by 4 from 4.

4. The image forming apparatus according to any one of claims 1 to 3, wherein the printing processing unit (16, 17, 18) includes:
a page data creation unit (16) that creates page data by laying out the medical image data on at least one page based on the specified AET;
a printing job creation unit (17) that creates a printing job using the page data based on the specified AET; and
an output unit (18) that perform printing on both surfaces of the medium based on the printing job.

5. The image forming apparatus according to any one of claims 1 to 4, further comprising:
a storage device (10a) that stores printing setting information (102) regarding printing of the medical image for each of a plurality of AETs.

6. The image forming apparatus according to claim 5, wherein the storage device (10a) further stores image data (103) for creating the cover page, the back cover page and an adjustment page for each of a plurality of AETs.

7. The image forming apparatus according to claim 5 or 6, further comprising:
a web service unit (12) that provides a web service for setting the printing setting information (102), and
a setting unit (13) that stores the printing setting information (102) in the storage device (10a).

8. The image forming apparatus according to claim 7, wherein the web service unit (12) provides a web service for setting image data (103) for creating the cover page, the back cover page and the adjustment page, and
an image data setting unit (14) that stores the image data (103) in the storage device (10a).

9. The image forming apparatus according to any one of claims 1 to 8, wherein the printing processing unit (16, 17, 18) extracts information from the medical data received by the data receiving unit (15), and performs printing based on the extracted information.

10. The image forming apparatus according to claim 9, wherein the information extracted from the medical data by the printing processing unit (16, 17, 18) is associated information (C1) relating to printing-related information, and
wherein the printing processing unit (16, 17, 18) prints the page including the medical image on the medium based on the associated information, or
wherein the information extracted from the medical data by the printing processing unit (16, 17, 18) is associated information (C2) relating to a patient, and
wherein the printing processing unit (16, 17, 18) prints the associated information on the medium based on the associated information.

11. The image forming apparatus according to claim 10, wherein the printing processing unit (16, 17, 18) prints the associated information on at least one page including the medical image so that the associated information is superimposed on the medical image, or
wherein the printing processing unit (16, 17, 18) prints the associated information on at least one page including the medical image so that the associated information is not superimposed on the medical image, or
wherein the printing processing unit (16, 17, 18) prints the associated information on at least one of the cover page and the back cover page.

12. The image forming apparatus according to any one of claims 10 to 11, further comprising a setting portion (42, 43, 44) for setting whether or not to print the associated information, and a page on which the associated information is to be printed.

13. An image forming apparatus comprising:
a data reception unit (15) that receives medical data including medical image data and associated information; and
a printing processing unit (16, 17, 18) that prints a cover page and a back cover page on a first surface of a medium, and lays out and prints at least one page including a medical image on a second surface of the medium opposite to the first surface based on the associated information included in the medical data.

14. The image forming apparatus according to claim 13, wherein the associated information is information regarding a layout of the medical image in a page, or
wherein the associated information is information regarding medical data.

15. The image forming apparatus according to any one of claims 13 to 14, wherein the medical data is data in accordance with DICOM standard.
